# EUROPEAN PATENT APPLICATION

(11) **EP 4 817 822 A1**
(43) Date of publication of application: **07.10.2026**
(21) Application number: 24897550.0
(22) Date of filing: 26.11.2024
(51) Int. Cl.: B25J 17/02

(54) **COMPLIANCE UNIT**

(30) Priority: 01.12.2023 JP 2023203972
(71) Applicant: SMC Corporation, Tokyo 104-0031 (JP)
(72) Inventor: SATO, Motohiro, Kashiwa-shi, Chiba 277-0871 (JP); YAJIMA, Hisashi, Kashiwa-shi, Chiba 277-0871 (JP)
(74) Representative: Keil & Schaafhausen Patentanwälte PartGmbB
(86) International application number: PCT/JP2024/041855
(87) International publication number: WO 2025/115866

(57) **Abstract**

A compliance unit (10) comprises: a base member (12); a table unit (14) that is arranged so as to be movable with respect to the base member along an XY plane in which the Y-direction is the vertical direction and the X-direction is a direction orthogonal to the Y direction; a compliance mechanism (16) that is interposed between the base member and the table unit so as to be movable in the X-direction and the Y-direction with respect to the base member and the table unit; and a pressing part (156) that is provided to the base member and presses the table unit upward.

## Description

### TECHNICAL FIELD

The present disclosure relates to a compliance unit.

### BACKGROUND ART

For example, in JP 2002-172582 A, a compliance unit equipped with a base member, a table unit, and a compliance mechanism is disclosed. The table unit is disposed to be capable of moving along an XY plane with respect to the base member. The compliance mechanism is interposed between the base member and the table unit so as to be capable of moving in an X direction and a Y direction with respect to the base member and the table unit. In the compliance unit, it is possible to lock the table unit in a state in which the table unit is returned to an origin position with respect to the base member.

### SUMMARY OF THE INVENTION

There is a long-awaited need to provide a more satisfactory compliance unit.

The present invention has the object of solving the aforementioned problem.

An aspect of the present disclosure is characterized by a compliance unit, comprising a base member, a table unit disposed so as to be movable with respect to the base member along an XY plane, wherein an upper-lower direction is a Y direction, and a direction perpendicular to the Y direction is an X direction, a compliance mechanism interposed between the base member and the table unit so as to be movable in the X direction and the Y direction with respect to the base member and the table unit, and a pressing member disposed on the base member and configured to press the table unit upward.

According to the present invention, it is possible to provide a more satisfactory compliance unit.

The above objects, features, and advantages will be easily understood from the following description of embodiments, which will be described with reference to the accompanying drawings.

### BRIEF DESCRIPTION OF DRAWINGS

[FIG. 1] FIG. 1 is a perspective view of a compliance unit according to a first embodiment;
[FIG. 2] FIG. 2 is an exploded perspective view of the compliance unit according to the first embodiment;
[FIG. 3] FIG. 3 is an exploded perspective view of the compliance unit according to the first embodiment;
[FIG. 4] FIG. 4 is a longitudinal cross-sectional view of the compliance unit according to the first embodiment;
[FIG. 5] FIG. 5 is a partially omitted cross-sectional view taken along line V-V of FIG. 4;
[FIG. 6] FIG. 6 is a longitudinal cross-sectional view taken along line VI-VI of FIG. 4;
[FIG. 7] FIG. 7 is a partially omitted cross-sectional view taken along line VII-VII of FIG. 6;
[FIG. 8] FIG. 8 is an explanatory diagram of operations of the compliance unit according to the first embodiment;
[FIG. 9] FIG. 9 is an explanatory diagram of operations of the compliance unit;
[FIG. 10] FIG. 10 is a cross-sectional explanatory diagram of a compliance unit according to a second embodiment;
[FIG. 11] FIG. 11 is a cross-sectional explanatory diagram of a compliance unit according to a third embodiment;
[FIG. 12] FIG. 12 is a partially omitted explanatory diagram of operations of the compliance unit according to the third embodiment;
[FIG. 13] FIG. 13 is a partially omitted explanatory diagram of operations of the compliance unit according to the third embodiment;
[FIG. 14] FIG. 14 is a partially omitted explanatory diagram of operations of the compliance unit according to the third embodiment; and
[FIG. 15] FIG. 15 is a cross-sectional explanatory diagram of a compliance unit according to a fourth embodiment.

### DETAILED DESCRIPTION OF THE INVENTION

Incidentally, the above-described conventional compliance unit may be disposed in a manner so that the Y direction is oriented in an upper-lower direction. In this case, in a state in which the table unit is not locked to the base member (the table unit is in an unlocked state), the table unit may move downward (in the direction of gravity) with respect to the base member due to its own weight. Upon doing so, in a state in which an external force is not acting on the table unit, the table unit, due to its own weight, may shift downward from the origin position with respect to the base member. The present disclosure has the object of suppressing movement of the table unit with respect to the base member due to gravity.

### (First Embodiment)

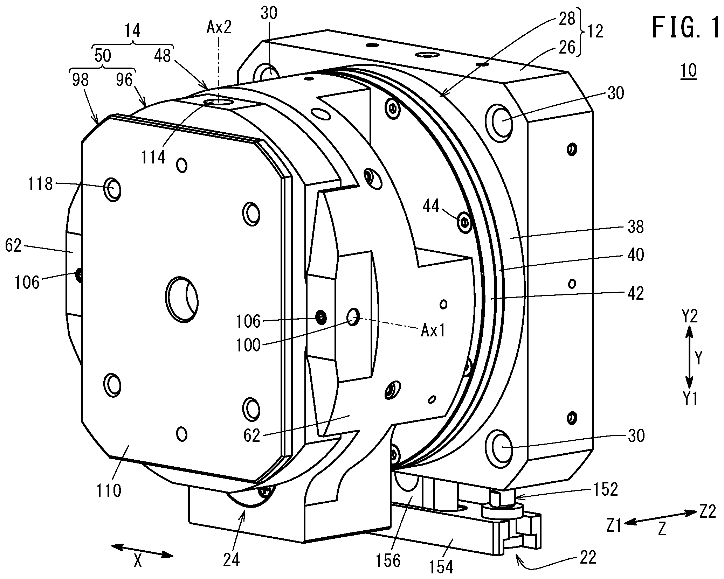

A description will be given concerning a compliance unit 10 according to a first embodiment of the present invention with reference to the drawings. The compliance unit 10, for example, is a device for correcting positional misalignment (misalignment) at a time during assembly of a workpiece. Specifically, as shown in FIG. 1, in the compliance unit 10, for example, a non-illustrated robot hand is connected to a base member 12, and a non-illustrated chuck member for gripping the workpiece is mounted on a table unit 14.

In the present embodiment, a description will be given concerning an example in which the compliance unit 10 is disposed in a manner so that the Y1 direction is oriented in a downward direction (the direction of gravity). Moreover, it should be noted that the X direction is a direction that is perpendicular to the Y direction. The Z direction is a direction that is perpendicular to the X direction and the Y direction.

The table unit 14 is capable of moving with respect to the base member 12 along the XY plane in a state in which the table unit 14 is unlocked. Further, a table main body 50 of the table unit 14 is capable of being tilted about a first axial line Ax1 lying along the X direction (the horizontal direction) with respect to a table support member 48, in a state in which it is not locked to the table support member 48 (in an unlocked state of the table main body 50). Furthermore, in the unlocked state of the table main body 50, the table main body 50 is capable of being tilted about a second axial line Ax2 lying along the Y direction (the upper-lower direction) with respect to the table support member 48.

In such a compliance unit 10, even in the case that a misalignment occurs at a time during assembly of the workpiece to insert the workpiece into a predetermined hole, the misalignment can be easily corrected since the table unit 14 is capable of moving in the X and Y directions and the table main body 50 is capable of being tilted with respect to the table support member 48. Moreover, the application of the compliance unit 10 is not limited to the example of inserting the workpiece into a hole. Further, the compliance unit 10 can also be used while being disposed in a state in which the Z direction is oriented in the direction of gravity. Hereinafter, a description will be given in detail concerning the configuration of the compliance unit 10.

As shown in FIG. 1 to FIG. 4, the compliance unit 10 is equipped with the base member 12, the table unit 14, a pair of compliance mechanisms 16, a first origin returning mechanism 18, a second origin returning mechanism 20, a pressing mechanism 22, and a tilting suppression member 24.

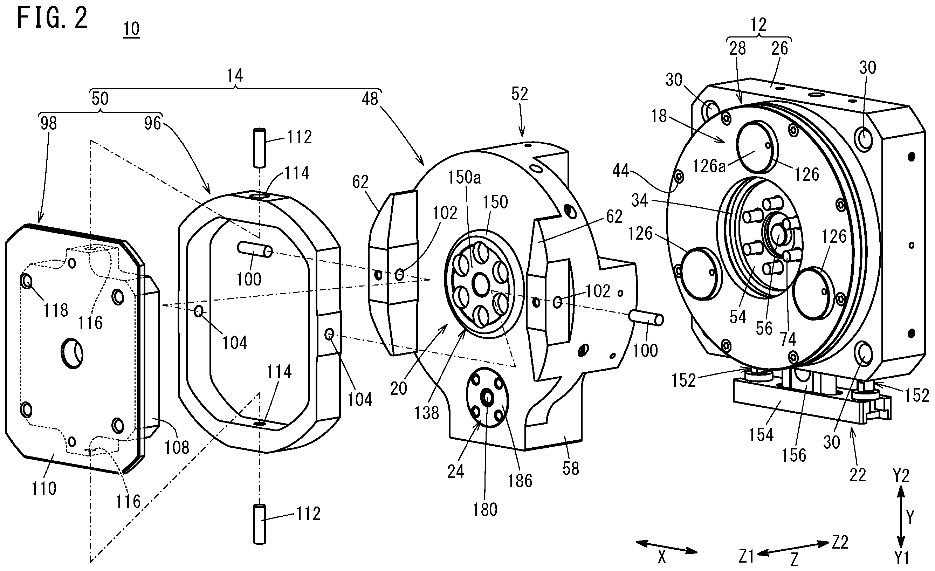

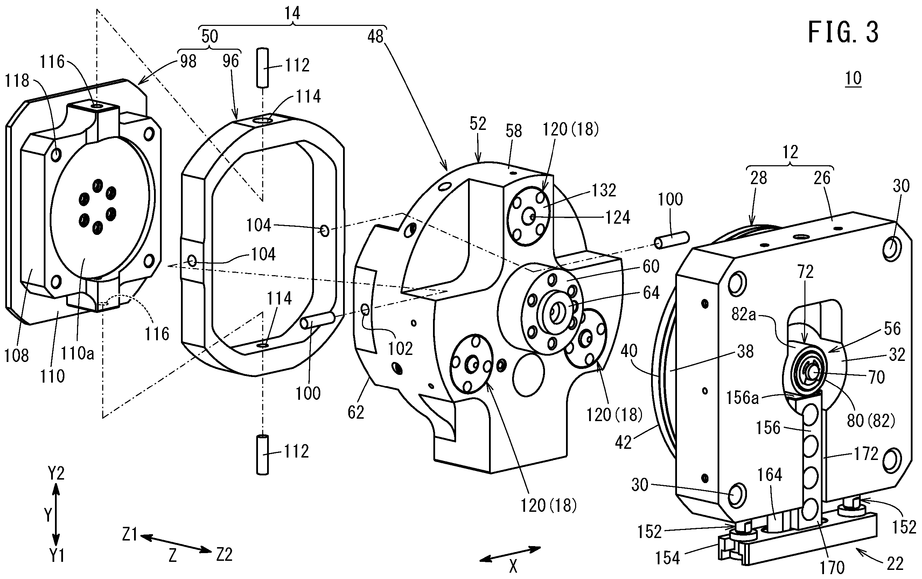

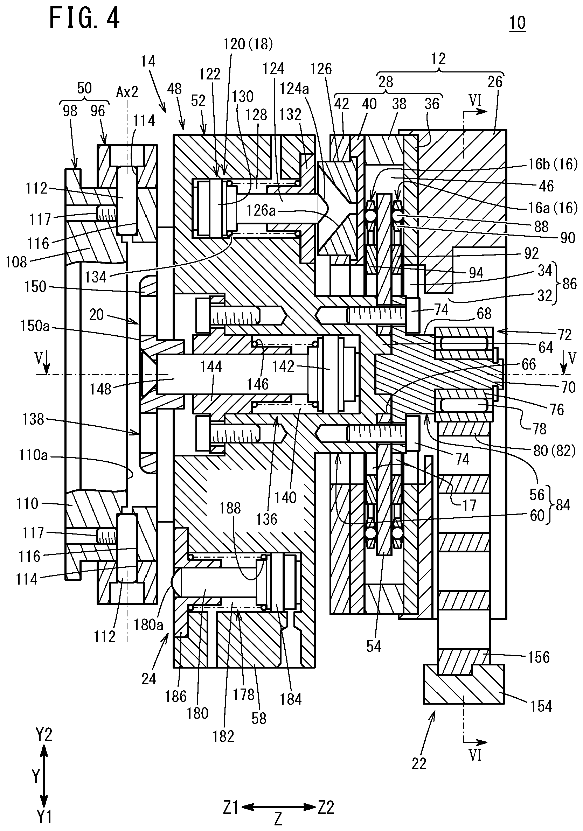

As shown in FIG. 2 to FIG. 4, the base member 12 includes a first base portion 26, and a second base portion 28. The first base portion 26 is a plate shaped member that extends in the X direction and the Y direction. The first base portion 26, when viewed from the Z direction, is formed in a shape that resembles a quadrangle with the corners thereof beveled. In each of the corners of the first base portion 26, a mounting hole 30 for mounting the first base portion 26 on a non-illustrated robot hand is formed. A first through hole 32 is formed in a central part of the first base portion 26 (refer to FIG. 3 and FIG. 4). The shape, the size and the like of the first base portion 26 can be set as appropriate.

As shown in FIG. 2 and FIG. 4, the second base portion 28 is mounted on a surface of the first base portion 26 that faces in the Z1 direction. A second through hole 34 is formed in a central part of the second base portion 28. More specifically, the second base portion 28 is formed in an annular shape (for example, a circular annular shape). The second through hole 34 communicates with the first through hole 32.

As shown in FIG. 4, the second base portion 28 includes a first base plate 36, an intermediate member 38, a second base plate 40, and a holding member 42. The first base plate 36, the intermediate member 38, the second base plate 40, and the holding member 42, in a state of being stacked in this order in the Z1 direction, are fixed to the first base portion 26 by a plurality of fastening members 44 (refer to FIG. 2). The fastening members 44, for example, are screw members. Each of the first base plate 36, the intermediate member 38, the second base plate 40, and the holding member 42 is formed in a circular annular shape.

As shown in FIG. 4, the first base plate 36 is disposed on a surface of the first base portion 26 that faces in the Z1 direction. The intermediate member 38 is disposed on a surface of the first base plate 36 that faces in the Z1 direction. The thickness dimension of the intermediate member 38 along the Z direction is greater than the thickness dimension of the first base plate 36 along the Z direction. The inner diameter of the intermediate member 38 is larger than the inner diameter of the first base plate 36. The second base plate 40 is disposed on a surface of the intermediate member 38 that faces in the Z1 direction. The inner diameter of the second base plate 40 is the same as the inner diameter of the first base plate 36. More specifically, a space 46 is formed between the first base plate 36 and the second base plate 40.

As shown in FIG. 2 and FIG. 4, a plurality of receiving members 126 that constitute the first origin returning mechanism 18 are disposed on a surface of the second base plate 40 that faces in the Z1 direction. The configuration of the receiving members 126 will be discussed later. The holding member 42 fixes the plurality of receiving members 126 to the second base plate 40.

As shown in FIG. 1 to FIG. 4, the table unit 14 is disposed to be capable of moving with respect to the base member 12 along the XY plane. The table unit 14 includes the table support member 48, and the table main body 50.

As shown in FIG. 2 to FIG. 4, the table support member 48 includes a first support member 52, a support plate 54, and a second support member 56. The first support member 52 is formed in a block shape. The first support member 52 includes a first support main body 58, a first shaft portion 60, and a pair of connecting convex portions 62.

The first origin returning mechanism 18, the second origin returning mechanism 20, and the tilting suppression member 24 are mounted on the first support main body 58. As shown in FIG. 3 and FIG. 4, the first shaft portion 60 protrudes toward the first base portion 26 (in the Z2 direction) from the first support main body 58. The first shaft portion 60 is inserted into the second through hole 34 of the second base portion 28. The first shaft portion 60 is positioned in a central part of the first support main body 58 in the X direction (refer to FIG. 3). A central projection 64 that protrudes in the Z2 direction is provided in a central part of an end surface of the first shaft portion 60 in the protruding direction (the Z2 direction).

As shown in FIG. 2 and FIG. 4, the pair of connecting convex portions 62 protrude in the Z1 direction from an outer circumferential part of a surface of the first support main body 58 that faces in the Z1 direction. The pair of connecting convex portions 62 are arranged alongside one another with a gap therebetween in the X direction. The pair of connecting convex portions 62 support the table main body 50.

As shown in FIG. 4, the support plate 54 is formed in a circular annular shape. The support plate 54 is disposed in the second through hole 34 of the second base portion 28. In other words, the support plate 54 is disposed in the space 46 between the first base plate 36 and the second base plate 40. The central projection 64 is inserted into a hole 66 on the inner side of the support plate 54.

The second support member 56 includes a second support main body 68, a second shaft portion 70, and a bearing 72. The second support main body 68 covers, from the Z2 direction, an inner circumferential end part of the support plate 54. The second support main body 68 and the support plate 54 are fixed to the first shaft portion 60 by a plurality of fastening members 74. The fastening members 74, for example, are screw members. The support plate 54 is retained between the first shaft portion 60 and the second support main body 68.

The second shaft portion 70 protrudes in the Z2 direction from the second support main body 68. The second shaft portion 70 is inserted into the first through hole 32 of the first base portion 26. The second shaft portion 70 is positioned in a central part of the second support main body 68.

The bearing 72, for example, is a roller bearing. The bearing 72 may be a sliding bearing. The bearing 72 includes an inner ring 76, a plurality of rolling elements 78, and an outer ring 80. The inner ring 76 is fixed to an outer circumferential surface of the second shaft portion 70. The plurality of rolling elements 78 are positioned between the inner ring 76 and the outer ring 80, and are arranged alongside one another in the circumferential direction of the second shaft portion 70. The outer ring 80 is a hollow roller portion 82 in which the second shaft portion 70 is disposed. The roller portion 82 is disposed to be capable of rotating with respect to the second shaft portion 70.

The table support member 48 includes a shaft portion 84 formed by the first shaft portion 60 and the second support member 56. The shaft portion 84 is positioned in a central part of the table unit 14 in the X direction. The shaft portion 84 is inserted into a through hole 86 of the base member 12. The through hole 86 is formed by the first through hole 32 and the second through hole 34. Between the outer circumferential surface of the shaft portion 84 and the inner circumferential surface of the base member 12, a suitable gap is formed that enables the table unit 14 to move in the X direction and the Y direction with respect to the base member 12.

A pair of the compliance mechanisms 16 are disposed on the support plate 54 of the table support member 48. In other words, the pair of compliance mechanisms 16 are interposed between the table unit 14 and the base member 12 so as to be capable of moving in the X direction and the Y direction with respect to the base member 12 and the table unit 14. One of the compliance mechanisms 16 is interposed between the first base plate 36 and the support plate 54. The other of the compliance mechanisms 16 is interposed between the second base plate 40 and the support plate 54. Hereinafter, the one of the compliance mechanisms 16 may be referred to as a "first compliance mechanism 16a," and the other of the compliance mechanisms 16 may be referred to as a "second compliance mechanism 16b."

The first compliance mechanism 16a includes a plurality of balls 88, and a plate shaped retainer 90. The balls 88, for example, are steel balls. The balls 88 are placed in contact with a plane of the first base plate 36 that faces in the Z1 direction, and a plane of the support plate 54 that faces in the Z2 direction.

The retainer 90 supports the plurality of balls 88 in a rollable manner. The retainer 90 is formed in a circular annular shape. The outer diameter of the retainer 90 is smaller than the inner diameter of the intermediate member 38. The inner diameter of the retainer 90 is larger than the inner diameter of the first base plate 36.

The movement of the first compliance mechanism 16a along the XY plane is restricted by a first stopper 92. The first stopper 92 is mounted by non-illustrated fastening members on the plane of the support plate 54 that faces in the Z2 direction. The first stopper 92 is formed in a circular annular shape. The first stopper 92 is positioned on the inner side of the retainer 90 of the first compliance mechanism 16a. The outer diameter of the first stopper 92 is smaller than the inner diameter of the retainer 90 of the first compliance mechanism 16a.

The second compliance mechanism 16b has the same configuration as the first compliance mechanism 16a. Therefore, a detailed description concerning the configuration of the second compliance mechanism 16b will be omitted. Moreover, the plurality of balls 88 of the second compliance mechanism 16b are placed in contact with a plane of the second base plate 40 that faces in the Z2 direction, and a plane of the support plate 54 that faces in the Z1 direction.

The movement of the second compliance mechanism 16b along the XY plane is restricted by a second stopper 94. The second stopper 94 is mounted by non-illustrated fastening members on the plane of the support plate 54 that faces in the Z1 direction. The second stopper 94 is formed in a circular annular shape. The second stopper 94 is positioned on the inner side of the retainer 90 of the second compliance mechanism 16b. The outer diameter of the second stopper 94 is smaller than the inner diameter of the retainer 90 of the second compliance mechanism 16b.

The shaft portion 84 of the table unit 14 extends toward the base member 12 via holes 17 of the pair of compliance mechanisms 16.

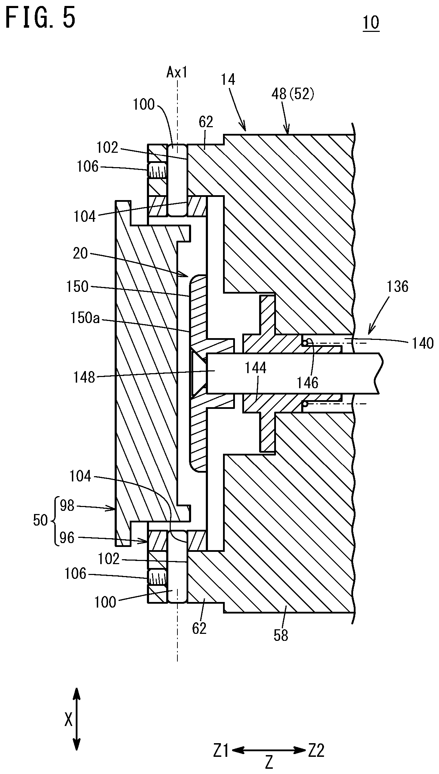

As shown in FIG. 2 to FIG. 4, the table main body 50 includes a first table main body portion 96 and a second table main body portion 98. The first table main body portion 96 is formed in an annular shape. The first table main body portion 96 extends in the Y direction. As shown in FIG. 1 and FIG. 5, the first table main body portion 96 is disposed between the pair of connecting convex portions 62 of the table support member 48. More specifically, the pair of connecting convex portions 62 are positioned on both sides of the first table main body portion 96 in the X direction.

As shown in FIG. 2, FIG. 3, and FIG. 5, the first table main body portion 96 is supported to be capable of being tilted with respect to the pair of connecting convex portions 62 by a pair of first pins 100. The first pins 100 are inserted so as to straddle over first connection holes 102 of the connecting convex portions 62, and first insertion holes 104 of the first table main body portion 96.

The first connection holes 102 penetrate through the connecting convex portions 62 in the X direction. The first insertion holes 104 are formed in portions of the first table main body portion 96 that are adjacent to the first connection holes 102, respectively. The first pins 100 are fixed to the connecting convex portions 62 by first fixing members 106 (refer to FIG. 5). The first pins 100 are not fixed to the first table main body portion 96. The first table main body portion 96 is tilted about the first axial line Ax1 of the first pins 100. The first axial line Ax1 extends along the X direction.

As shown in FIG. 2 to FIG. 4, the second table main body portion 98 includes a connecting member 108, and a table plate 110. The connecting member 108 is inserted on the inner side of the first table main body portion 96 (refer to FIG. 1, FIG. 4, and FIG. 5). The connecting member 108 is supported to be capable of being tilted with respect to the first table main body portion 96 by a pair of second pins 112. The second pins 112 are inserted so as to straddle over second insertion holes 114 of the first table main body portion 96, and second connection holes 116 of the connecting member 108.

The pair of second insertion holes 114 are disposed in portions of the first table main body portion 96 that face toward each other in the Y direction. More specifically, the second insertion holes 114 penetrate through the first table main body portion 96 in the Y direction. The second connection holes 116 are formed in portions of the connecting member 108 that are adjacent to the second insertion holes 114, respectively. The second pins 112 are fixed to the connecting member 108 by second fixing members 117 (refer to FIG. 4). The second pins 112 are not fixed to the first table main body portion 96. The second table main body portion 98 is tilted about the second axial line Ax2 of the second pins 112. The second axial line Ax2 extends along the Y direction. The second axial line Ax2 extends in a direction that is perpendicular to the first axial line Ax1.

The table plate 110 is disposed on an end part of the connecting member 108 in the Z1 direction. The table plate 110 extends outward beyond the connecting member 108. In the table plate 110, there are formed a plurality of mounting holes 118 for mounting a non-illustrated chuck member.

The first origin returning mechanism 18 can lock the table unit 14 to the base member 12 in a state in which the table unit 14 has been returned to the origin position. The first origin returning mechanism 18 includes a plurality of origin returning members 120. According to the present embodiment, the first origin returning mechanism 18 includes three origin returning members 120. The three origin returning members 120 are arranged at equal intervals (for example, 120° intervals) in the circumferential direction of the shaft portion 84 of the table support member 48.

The origin returning members 120 each include a first cylinder portion 122, a first retaining member 124, and the receiving member 126. As shown in FIG. 4, the first cylinder portion 122, for example, is a fluid pressure cylinder that operates using fluid pressure. Specifically, the first cylinder portion 122 is a pneumatic cylinder that operates using air pressure. The configuration of the first cylinder portion 122 can be set as appropriate. The same applies concerning a second cylinder portion 136, third cylinder portions 152, and a fourth cylinder portion 178, which will be described later.

The first cylinder portion 122 includes a first cylinder hole 128, a first piston member 130, a first cover member 132, and a first biasing member 134. The first cylinder hole 128 is formed on an outer circumferential part of the first support main body 58 so as to extend in the Z direction. The first cylinder hole 128 opens on a surface of the first support main body 58 that faces in the Z2 direction.

The first piston member 130 slides in the Z direction along the inner surface of the first cylinder hole 128. The first cover member 132 is mounted on the first support main body 58 so as to close an opening of the first cylinder hole 128 in the Z2 direction. The first biasing member 134 is interposed between the first piston member 130 and the first cover member 132. The first biasing member 134 biases the first piston member 130 in the Z1 direction. The first biasing member 134, for example, is a compression coiled spring. The first biasing member 134 may be a rubber member or the like.

The first retaining member 124 protrudes in the Z2 direction from the first piston member 130. The first retaining member 124 penetrates through the first cover member 132. A first retaining surface 124a is provided on an end part of the first retaining member 124 in the protruding direction (the Z2 direction). The first retaining surface 124a is a conical shaped convex surface.

The receiving member 126 is mounted on the second base portion 28 so as to face toward the first retaining member 124. The receiving member 126 includes a concavely shaped first receiving surface 126a that is capable of being contacted by an end part of the first retaining member 124 in the Z2 direction. The first receiving surface 126a is a conical shaped concave surface.

In such a first origin returning mechanism 18, in the case that the table unit 14 is to be placed in an unlocked state, the first retaining member 124 is positioned in an unlocked position (the position of the first retaining member 124 shown in FIG. 4). In this state, since the first retaining surface 124a is not pressed toward the first receiving surface 126a by the first piston member 130, the table unit 14 is capable of moving with respect to the base member 12 along the XY plane.

In the case that the table unit 14 is locked by the first origin returning mechanism 18, the first piston member 130 is made to move in the Z2 direction by supplying air to the first cylinder portion 122. In accordance therewith, since the first retaining surface 124a presses against the first receiving surface 126a, the table unit 14 is returned to the origin position with respect to the base member 12 and is locked into place. In other words, in the locked state of the table unit 14, the table unit 14 is incapable of moving with respect to the base member 12 along the XY plane.

According to the present embodiment, the first piston member 130 is biased in an opposite direction to the first receiving surface 126a by the first biasing member 134. In accordance therewith, when a pressure that is greater than or equal to a minimum operating pressure of a non-illustrated pressure reducing valve is applied to the first cylinder portion 122, it is possible to suppress a situation in which an excessive pressing force (an origin returning force) is applied to the receiving member 126 from the first retaining member 124.

As shown in FIG. 2 and FIG. 4, the second origin returning mechanism 20 can lock the table unit 14 to the table support member 48 in a state in which the table unit 14 has been returned to the origin posture. As shown in FIG. 4, the second origin returning mechanism 20 includes the second cylinder portion 136, and a second retaining member 138. The second cylinder portion 136 includes a second cylinder hole 140, a second piston member 142, a second cover member 144, and a second biasing member 146. The second cylinder hole 140 is formed in a central part of the first support main body 58 so as to extend in the Z direction. The second cylinder hole 140 opens on a surface of the first support main body 58 that faces in the Z1 direction.

The second piston member 142 slides in the Z direction along the inner surface of the second cylinder hole 140. The second cover member 144 is mounted on the first support main body 58 so as to close an opening of the second cylinder hole 140 in the Z1 direction. The second biasing member 146 is interposed between the second piston member 142 and the second cover member 144. The second biasing member 146 biases the second piston member 142 in the Z2 direction. The second biasing member 146, for example, is a compression coiled spring. The second biasing member 146 may be a rubber member or the like.

The second retaining member 138 includes a rod portion 148, and a retaining main body 150. The rod portion 148 protrudes in the Z1 direction from the second piston member 142. The rod portion 148 penetrates through the second cover member 144. The retaining main body 150 is mounted on a protruding end part of the rod portion 148. The retaining main body 150 is formed in a flat plate shape. The retaining main body 150 includes a flat second retaining surface 150a that faces in the Z1 direction. The second retaining surface 150a is capable of pressing, in the Z1 direction, a second receiving surface 110a of the table plate 110 that faces in the Z2 direction.

In such a second origin returning mechanism 20, in the case that the table main body 50 is to be placed in an unlocked state, the second retaining member 138 is positioned in an unlocked position (the position of the second retaining member 138 shown in FIG. 4). In this state, since the second retaining surface 150a is not pressed toward the second receiving surface 110a by the second piston member 142, the table main body 50 is capable of being tilted about the first axial line Ax1 and is also capable of being tilted about the second axial line Ax2.

In the case that the table main body 50 is locked by the second origin returning mechanism 20, the second piston member 142 is made to move in the Z1 direction by supplying air to the second cylinder portion 136. In accordance therewith, since the second retaining surface 150a presses against the second receiving surface 110a, the table main body 50 is returned to the origin posture with respect to the table support member 48 and is locked into place. In other words, in a locked state of the table main body 50, the table main body 50 is incapable of being tilted about the first axial line Ax1 and is also incapable of being tilted about the second axial line Ax2 with respect to the table support member 48.

According to the present embodiment, the second piston member 142 is biased in an opposite direction to the second receiving surface 110a by the second biasing member 146. In accordance therewith, when a pressure that is greater than or equal to a minimum operating pressure of a non-illustrated pressure reducing valve is applied to the second cylinder portion 136, it is possible to suppress a situation in which an excessive pressing force (an origin returning force) is applied to the table main body 50 from the second retaining member 138.

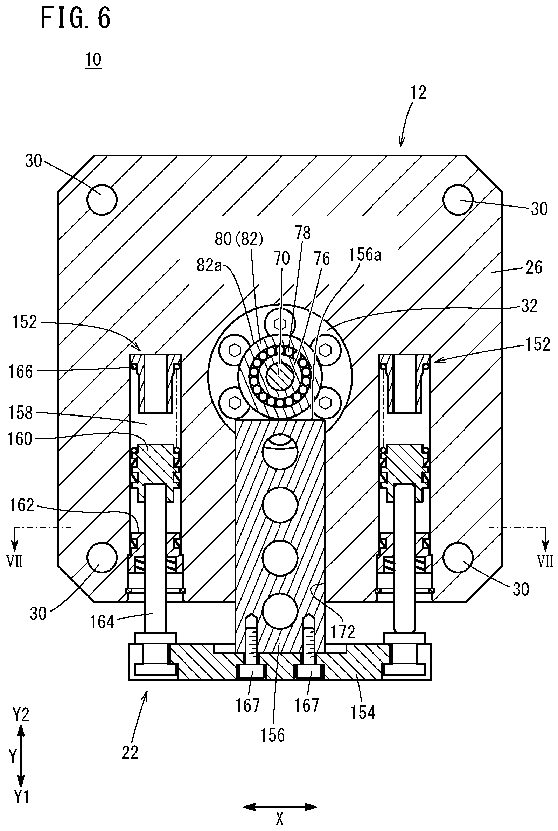

As shown in FIG. 6, the pressing mechanism 22 is disposed on the base member 12 and presses the table unit 14 in the Y2 direction (upward). The pressing mechanism 22 includes a pair of third cylinder portions 152, a connecting member 154, and a pressing member 156. The pair of third cylinder portions 152 are disposed in the first base portion 26. The pair of third cylinder portions 152 are arranged alongside one another in the X direction. The third cylinder portions 152 each include a third cylinder hole 158, a third piston member 160, a third cover member 162, a third biasing member 166, and a rod portion 164.

The third cylinder hole 158 is formed in the first base portion 26 so as to extend in the Y direction. The third cylinder hole 158 opens on a side surface of the first base portion 26 in the Y1 direction. The third piston member 160 slides in the Y direction along the inner surface of the third cylinder hole 158. The third cover member 162 is mounted on the first base portion 26 so as to close an end part of the third cylinder hole 158 in the Y1 direction. The third biasing member 166 is disposed in the third cylinder hole 158 so as to bias the third piston member 160 in the Y1 direction. The third biasing member 166, for example, is a compression coiled spring. The third biasing member 166 may be a rubber member or the like. The rod portion 164 protrudes in the Y1 direction from the third piston member 160. The rod portion 164 penetrates through the third cover member 162.

The connecting member 154 connects together end parts of the pair of rod portions 164 in the Y1 direction. The pressing member 156 extends in the Y direction. An end part of the pressing member 156 in the Y1 direction is fastened by a plurality of fastening members 167 to the connecting member 154. The fastening members 167, for example, are screw members.

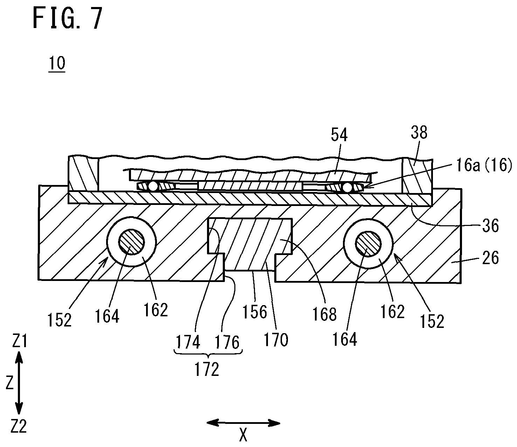

As shown in FIG. 7, the pressing member 156 is inserted into a guide groove 172 that is formed in the first base portion 26. The guide groove 172 is in communication with the first through hole 32 (refer to FIG. 6). The guide groove 172 includes a first groove portion 174 and a second groove portion 176. The second groove portion 176 communicates with the first groove portion 174, and opens on a surface of the first base portion 26 in the Z2 direction. The dimension of the first groove portion 174 in the X direction is greater than the dimension of the second groove portion 176 in the X direction.

The pressing member 156 includes a first part 168 that is disposed in the first groove portion 174, and a second part 170 that is disposed in the second groove portion 176. The dimension of the first part 168 in the X direction is greater than the dimension of the second groove portion 176 in the X direction. In accordance therewith, the pressing member 156 can be prevented from coming out of the guide groove 172 in the Z2 direction. As shown in FIG. 6, a flat pressing surface 156a is provided on an end surface of the pressing member 156 in the Y2 direction. The pressing surface 156a is in contact with an outer circumferential surface 82a of the roller portion 82.

As shown in FIG. 4, the tilting suppression member 24 suppresses tilting of the table main body 50 with respect to the table unit 14 due to gravity. The tilting suppression member 24 includes a fourth cylinder portion (a tilting suppression cylinder portion) 178, and a contact portion 180. The fourth cylinder portion 178 includes a fourth cylinder hole 182, a fourth piston member 184, a fourth cover member 186, and a fourth biasing member (a tilting suppression biasing member) 188.

The fourth cylinder hole 182 is formed on an end part of the first support main body 58 in the Y1 direction so as to extend in the Z direction. The fourth cylinder hole 182 opens on a surface of the first support main body 58 that faces in the Z1 direction.

The fourth piston member 184 slides in the Z direction along the inner surface of the fourth cylinder hole 182. The fourth cover member 186 is mounted on the first support main body 58 so as to close an opening of the fourth cylinder hole 182 in the Z1 direction. The fourth biasing member 188 is interposed between the fourth piston member 184 and the fourth cover member 186. The fourth biasing member 188 biases the fourth piston member 184 in the Z2 direction. In other words, the fourth biasing member 188 biases the contact portion 180 in a direction away from the table main body 50. The fourth biasing member 188, for example, is a compression coiled spring. The fourth biasing member 188 may be a rubber member or the like.

The contact portion 180 protrudes toward the Z1 direction from the fourth piston member 184. The contact portion 180 penetrates through the fourth cover member 186. A contact surface 180a is provided on an end part of the contact portion 180 in the protruding direction. The contact surface 180a is a curved surface that protrudes in an arcuate shape in the Z1 direction. The contact surface 180a faces toward an end part of the first table main body portion 96 in the Y1 direction.

Incidentally, when the table unit 14 is placed in an unlocked state together with the compliance unit 10 being disposed in a manner so that the Y1 direction is oriented in the direction of gravity, the table unit 14 will attempt to move downward with respect to the base member 12 due to its own weight. According to the present embodiment, since the pressing member 156 presses the roller portion 82 of the table unit 14 in the Y2 direction (upward), it is possible to suppress a situation in which the table unit 14 shifts downward from the origin position with respect to the base member 12.

Specifically, according to the present embodiment, by supplying air to each of the pair of third piston members 160, the pair of third piston members 160 are pressed upward. Upon doing so, since the pressing member 156 is pressed upward by the third piston members 160, the roller portion 82 of the table unit 14 is pressed upward.

When the third piston members 160 move upward through the third cylinder holes 158, the third biasing members 166 are compressed, and therefore, an elastic force from the third biasing members 166 acts on the third piston members 160. This elastic force increases as the amount of upward movement of the third piston members 160 increases. In accordance therewith, in a state in which the table unit 14 is positioned at the origin point (i.e., in a state in which the weight of the table unit 14 and the pressing force due to the pressing member 156 are balanced), the third piston members 160 can be positioned at an intermediate position of the stroke.

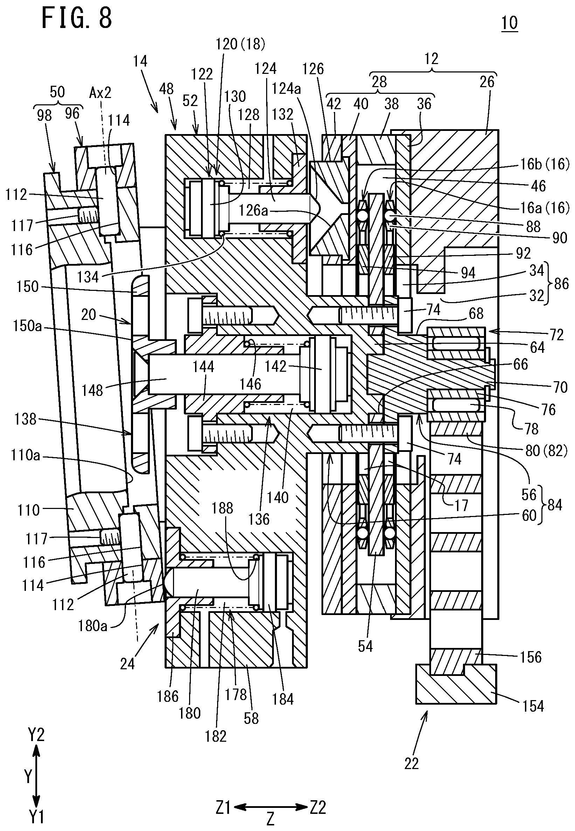

Further, when the table main body 50 is placed in an unlocked state together with the compliance unit 10 being disposed in a manner so that the Y1 direction is oriented in the direction of gravity, then as shown in FIG. 8, it becomes easy for the table unit 14 to be tilted with respect to the table support member 48 due to its own weight in a manner so that the upper end part of the table main body 50 protrudes further in the Z1 direction than the lower end part thereof.

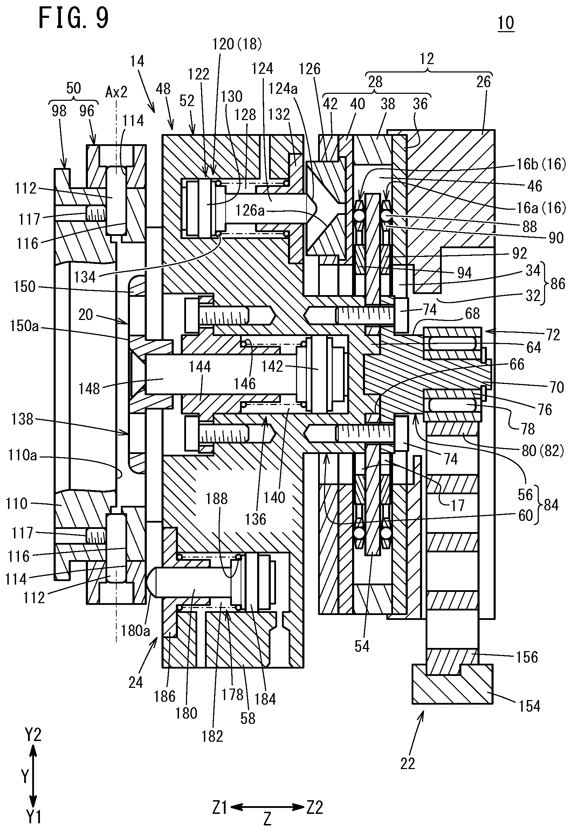

According to the present embodiment, as shown in FIG. 9, by supplying air to the fourth piston member 184 of the tilting suppression member 24, the fourth piston member 184 is made to move in the Z1 direction. In accordance therewith, since the contact surface 180a presses against the lower end part of the table main body 50 in the Z1 direction, a situation is suppressed in which the table main body 50 is tilted with respect to the table support member 48 due to its own weight. In other words, even in the case that the compliance unit 10 is disposed in a manner so that the Y1 direction is oriented in the direction of gravity, it is possible to suppress a situation in which the table main body 50 shifts (is tilted) from the origin posture with respect to the table support member 48 due to its own weight.

When the fourth piston member 184 moves in the Z1 direction, the fourth biasing member 188 is compressed, and therefore, an elastic force from the fourth biasing member 188 acts on the fourth piston member 184. This elastic force increases as the amount of movement of the fourth piston member 184 in the Z1 direction increases. In accordance therewith, in a state in which the table main body 50 is positioned in the origin posture (i.e., in a state in which the weight of the table main body 50 and the pressing force due to the contact portion 180 are balanced), the fourth piston member 184 can be positioned at an intermediate position of the stroke.

Moreover, in a state in which the table main body 50 is supported by the contact portion 180, the contact portion 180 and the fourth piston member 184 are capable of moving in the Z2 direction. Therefore, for example, when an external force is applied to the table main body 50 in a state in which the table main body 50 is supported by the table support member 48, the table main body 50 is capable of being tilted about the first axial line Ax1 in a manner so that the upper end part of the table main body 50 protrudes further in the Z1 direction than the lower end part thereof.

According to the present embodiment, since the compliance unit 10 is equipped with the pressing member 156 that is disposed on the base member 12 and presses the table unit 14 upward, it is possible to suppress a situation in which the table unit 14 moves downward with respect to the base member 12 due to its own weight. Thus, it is possible to provide a more satisfactory compliance unit 10.

### (Second Embodiment)

Next, a description will be given concerning a compliance unit 10A according to a second embodiment. In the compliance unit 10A according to the present embodiment, the same reference numerals are used for the same constituent elements as those of the compliance unit 10 according to the first embodiment described above, and detailed description of such features will be omitted. In the compliance unit 10A, configurations thereof that are similar to those of the compliance unit 10 achieve similar effects.

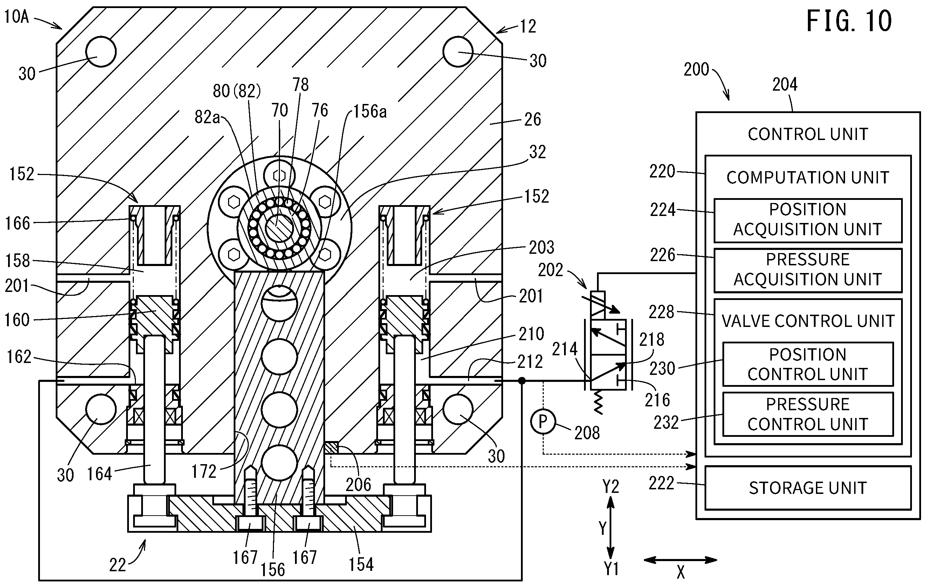

FIG. 10 is a cross-sectional explanatory diagram of the compliance unit 10A according to the second embodiment. As shown in FIG. 10, the compliance unit 10A includes a control device 200 that controls operations of the third cylinder portions 152. In the compliance unit 10A, each of the third cylinder portions 152 is provided with an exhaust port 201 that allows communication between the exterior and a portion 203 of the third cylinder hole 158 that is located further in the Y2 direction than the third piston member 160. The exhaust port 201 is capable of exhausting, to the exterior, the air inside the portion 203 of the third cylinder hole 158. The control device 200 includes a valve 202, a control unit (a controller) 204, a position sensor 206, and a pressure sensor 208.

The valve 202 is provided in a supply and discharge flow path 212 that communicates with a pressurizing chamber 210 of each of the third piston members 160. The pressurizing chamber 210 is disposed between the third piston member 160 and the third cover member 162. In other words, the pressurizing chamber 210 is positioned below the third piston member 160. The valve 202 is capable of continuously controlling the pressure of the fluid inside the pressurizing chamber 210. Moreover, as the fluid, for example, air is used, but oil may also be used.

The valve 202, for example, is a servo valve. The valve 202 is capable of controlling the flow rate of the fluid supplied to the pressurizing chamber 210. The valve 202 includes an output port 214, a supply port 216, and a discharge port 218. The output port 214 communicates with the supply and discharge flow path 212. A fluid (a compressed fluid) is supplied from a non-illustrated supply source to the supply port 216. The discharge port 218 communicates with the outside air. The valve 202, by placing the supply port 216 and the output port 214 in communication, is capable of supplying the fluid to the pressurizing chamber 210. The valve 202, by placing the output port 214 and the discharge port 218 in communication, is capable of discharging the fluid in the pressurizing chamber 210 to the exterior. The valve 202 is not limited to being a servo valve, but may also be an electro-pneumatic regulator.

The position sensor 206 detects the position of the pressing member 156. The position sensor 206 is disposed on the first base portion 26. The detection signal from the position sensor 206 is output to the control unit 204. The pressure sensor 208 detects the pressure in the pressurizing chamber 210. The pressure sensor 208, for example, is disposed in the supply and discharge flow path 212. The detection signal from the pressure sensor 208 is output to the control unit 204.

The control unit 204 is equipped with a computation unit 220, and a storage unit 222. The computation unit 220, for example, is constituted by a processor such as a CPU (Central Processing Unit) or a GPU (Graphics Processing Unit). More specifically, the computation unit 220 is constituted by processing circuitry.

The computation unit 220 includes a position acquisition unit 224, a pressure acquisition unit 226, and a valve control unit 228. The position acquisition unit 224, the pressure acquisition unit 226, and the valve control unit 228 can be realized by a program that is stored in the storage unit 222 being executed by the computation unit 220. Moreover, at least a portion of the position acquisition unit 224, the pressure acquisition unit 226, and the valve control unit 228 may be realized by an integrated circuit such as an ASIC (Application Specific Integrated Circuit) or an FPGA (Field Programmable Gate Array). Further, at least a portion of the position acquisition unit 224, the pressure acquisition unit 226, and the valve control unit 228 may be constituted by an electronic circuit including a discrete device.

The storage unit 222 is constituted by a non-illustrated volatile memory, and a non-illustrated non-volatile memory. As an example of the volatile memory, there may be cited a RAM (Random Access Memory) or the like. The volatile memory is used as a working memory of the processor, and temporarily stores data and the like that are required for processing or calculation. As an example of the non-volatile memory, there may be cited a ROM (Read Only Memory), a flash memory, or the like. The non-volatile memory is used as a storage memory, and stores a program, a table, a map, and the like. At least a portion of the storage unit 222 may be provided in the processor, the integrated circuit, or the like described above.

The position acquisition unit 224 acquires the position of the table unit 14 based on the signal detected by the position sensor 206. The pressure acquisition unit 226 acquires the pressure in the pressurizing chamber 210 based on the signal detected by the pressure sensor 208.

The valve control unit 228 controls operations of the valve 202. The valve control unit 228 carries out a feedback control of the operations of the valve 202 in a manner so that the table unit 14 is positioned at a predetermined origin position. The valve control unit 228 carries out the feedback control of the operations of the valve 202, based on the position acquired by the position acquisition unit 224. The valve control unit 228 carries out the feedback control of the operations of the valve 202, based on the pressure acquired by the pressure acquisition unit 226.

Specifically, the valve control unit 228 includes a position control unit 230, and a pressure control unit 232. The position control unit 230 calculates an amount of deviation of the table unit 14 from the origin position, based on a predetermined origin position signal and a position signal corresponding to the position of the table unit 14 acquired by the position acquisition unit 224. Moreover, the origin position signal is stored in the storage unit 222. The position control unit 230, based on the amount of deviation, calculates a pressure (a set pressure) in the pressurizing chamber 210 necessary in order for the table unit 14 to be positioned at the origin position. The position control unit 230 outputs a set pressure signal corresponding to the set pressure.

The pressure control unit 232 calculates and outputs a control signal for the valve 202, based on the set pressure signal and a pressure signal corresponding to the pressure in the pressurizing chamber 210 acquired by the pressure acquisition unit 226. The control signal output from the pressure control unit 232 is supplied via a non-illustrated power amplifier to the valve 202. The valve 202 changes the degree of opening thereof based on the control signal supplied from the power amplifier.

In the case that the table unit 14 is positioned below the origin position, the valve control unit 228 controls the operation of the valve 202 in a manner so that the degree of opening of the valve 202 increases. Upon doing so, since the pressure in the pressurizing chamber 210 increases, the third piston member 160 moves upward with respect to the base member 12. In accordance therewith, since the table unit 14 moves upward with respect to the base member 12, the position of the table unit 14 is brought closer to the origin position.

On the other hand, in the case that the table unit 14 is positioned above the origin position, the valve control unit 228 controls the operation of the valve 202 in a manner so that the degree of opening of the valve 202 decreases. Upon doing so, since the pressure in the pressurizing chamber 210 decreases, the third piston member 160 moves downward with respect to the base member 12. In accordance therewith, since the table unit 14 moves downward with respect to the base member 12, the position of the table unit 14 is brought closer to the origin position.

According to the present embodiment, the valve control unit 228 carries out the feedback control of the operations of the valve 202 in a manner so that the table unit 14 is positioned at the origin position. In accordance therewith, even in the case that the position of the table unit 14 shifts from the origin position in a state in which the external force does not act on the table unit 14, the position of the table unit 14 can be returned to the origin position by the valve control unit 228.

### (Third Embodiment)

Next, a description will be given concerning a compliance unit 10B according to a third embodiment. In the compliance unit 10B according to the present embodiment, the same reference numerals are used for the same constituent elements as those of the compliance unit 10 according to the first embodiment described above, and detailed description of such features will be omitted. In the compliance unit 10B, configurations thereof that are similar to those of the compliance unit 10 achieve similar effects.

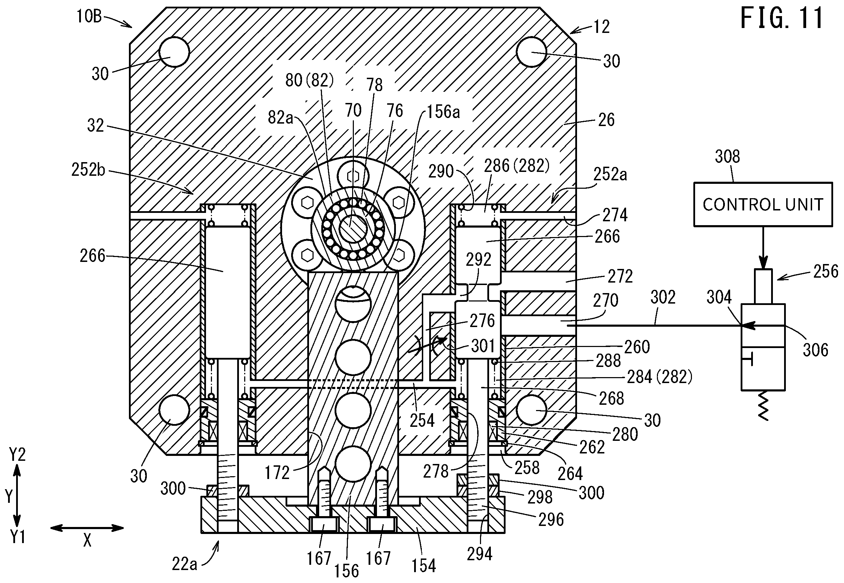

FIG. 11 is a cross-sectional explanatory diagram of the compliance unit 10B according to the third embodiment. As shown in FIG. 11, the compliance unit 10B is equipped with a pressing mechanism 22a instead of the pressing mechanism 22 described above.

The pressing mechanism 22a includes a pair of spool valves 252a and 252b, a connecting flow path 254, an opening/closing valve 256, the connecting member 154, and the pressing member 156. The pair of spool valves 252a and 252b are arranged alongside one another in the X direction.

The spool valve 252a includes a valve hole 258, a sleeve 260, a head cover 262, a retaining ring 264, a valve element 266, a rod portion 268, an inlet port 270, a discharge port 272, an air port 274, and a communication passage 276. The valve hole 258 extends along the Y direction. The valve hole 258 opens on a side surface (a downward facing side surface) of the base member 12 that faces in the Y1 direction. The sleeve 260 is formed in a cylindrical shape. The sleeve 260, for example, is made of metal, but is not necessarily limited to this feature. The sleeve 260 is disposed in the valve hole 258.

The head cover 262 is disposed on an end part of the valve hole 258 in the Y1 direction. The head cover 262 prevents the sleeve 260 from coming out in the Y1 direction. An insertion hole 278 through which the rod portion 268 is inserted is formed in the head cover 262. A guide member 280 is disposed on an inner circumferential surface of the insertion hole 278. The guide member 280 guides the rod portion 268 in a manner so that the rod portion 268 moves smoothly in the Y direction with respect to the head cover 262. The retaining ring 264 prevents the head cover 262 from separating away from the valve hole 258. A valve chamber 282 is formed in the interior of the sleeve 260.

The valve element 266 is disposed in the valve chamber 282. The valve element 266 slides in the Y direction along an inner circumferential surface of the sleeve 260. The valve element 266, for example, is made of metal, but is not necessarily limited to this feature. The valve element 266 divides the valve chamber 282 into a first chamber 284 and a second chamber 286. The first chamber 284 is positioned more downward (in the Y1 direction) than the valve element 266. In other words, the first chamber 284 is formed between the valve element 266 and the head cover 262. A biasing member 288 that biases the valve element 266 upward (in the Y2 direction) is disposed in the first chamber 284. The second chamber 286 is positioned more upward (in the Y2 direction) than the valve element 266. A biasing member 290 that biases the valve element 266 downward (in the Y1 direction) is disposed in the second chamber 286. Each of the biasing members 288 and 290, for example, is a compression coiled spring. An annular groove 292 is formed in an intermediate portion of the valve element 266 in the Y direction.

The rod portion 268 extends downward (in the Y1 direction) from the valve element 266. The rod portion 268 is inserted through the insertion hole 278 of the head cover 262. An extended end part of the rod portion 268 is provided with a male threaded portion 296 that is screwed into a female threaded portion 294 that is formed in the connecting member 154. A position adjusting nut 298 and a fixing nut 300 are screwed onto the male threaded portion 296. The position adjusting nut 298 is capable of adjusting the position of the valve element 266 within the valve chamber 282, in a manner so that the valve element 266 is positioned at a predetermined reference position in a state in which the table unit 14 is positioned at the origin position. The fixing nut 300 suppresses loosening of the position adjusting nut 298.

Each of the inlet port 270, the discharge port 272, the air port 274, and the communication passage 276 is formed by causing a hole that is formed in the first base portion 26 and a hole that is formed in the sleeve 260 to communicate with each other. The inlet port 270 causes the fluid to be introduced into the valve chamber 282. The discharge port 272 can communicate with the annular groove 292. The air port 274 communicates with the second chamber 286. The inlet port 270, the discharge port 272, and the air port 274 are arranged in this order in the Y2 direction.

The communication passage 276 places the first chamber 284 and the annular groove 292 in communication. A variable throttling portion 301 is disposed in the communication passage 276. The variable throttling portion 301 is capable of changing a flow path cross-sectional area of the communication passage 276.

The spool valve 252b is basically configured in the same manner as the spool valve 252a. The spool valve 252b does not include the inlet port 270, the discharge port 272, the communication passage 276, and the variable throttling portion 301 that are included in the spool valve 252a. The pair of spool valves 252a and 252b are connected to each other via the connecting flow path 254. The connecting flow path 254 connects the communication passage 276 of the spool valve 252a and the first chamber 284 of the spool valve 252b to each other. The position adjusting nut 298 is not provided on the rod portion 268 of the spool valve 252b. Further, the annular groove 292 is not provided on the valve element 266 of the spool valve 252b.

The opening/closing valve 256 opens and closes a supply and discharge flow path 302 that communicates with the inlet port 270. The opening/closing valve 256 includes an output port 304 and a supply port 306. The output port 304 communicates with the supply and discharge flow path 302. A fluid (a compressed fluid) is supplied from a non-illustrated supply source to the supply port 306. In a valve open state of the opening/closing valve 256, the fluid from the supply source is guided via the supply and discharge flow path 302 to the inlet port 270. In a valve closed state of the opening/closing valve 256, the supply of the fluid from the supply source to the supply and discharge flow path 302 is stopped.

The opening/closing valve 256 is turned ON when the compliance unit 10B is in use, and is turned OFF in a state in which the compliance unit 10B is not in use. In the OFF state, the opening/closing valve 256 is maintained in the valve closed state. In accordance therewith, it is possible to reduce the energy consumption of the compliance unit 10B. In particular, in the case that the sleeve 260 is made of metal, by turning the opening/closing valve 256 OFF in the case that the compliance unit 10B is not being used, leakage of fluid (leakage of air) can be minimized.

The compliance unit 10B includes a control unit 308 that controls operations of the opening/closing valve 256. The control unit 308 is equipped with a non-illustrated computation unit, and a non-illustrated storage unit. The computation unit, for example, is constituted by a processor such as a CPU or a GPU. More specifically, the computation unit is constituted by processing circuitry. In the compliance unit 10B, the opening/closing valve 256 may be configured to be manually switched between the valve open state and the valve closed state.

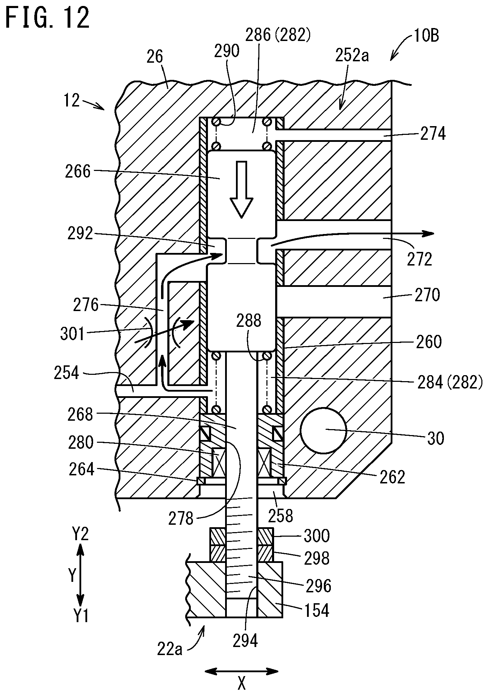

Next, a description will be given concerning operations of the compliance unit 10B. FIG. 12 to FIG. 14 are partially omitted explanatory diagrams of operations of the compliance unit 10B according to the third embodiment. In the case that the table unit 14 is positioned above the origin position, then as shown in FIG. 11 and FIG. 12, the inlet port 270 is closed by the valve element 266 in the spool valve 252a. Furthermore, in the spool valve 252a, the discharge port 272 communicates with the annular groove 292. Moreover, the air port 274 is in communication with the second chamber 286.

Upon doing so, the fluid inside the first chamber 284 of the spool valve 252a is discharged to the exterior via the communication passage 276, the annular groove 292, and the discharge port 272. Further, the fluid inside the first chamber 284 of the spool valve 252b is discharged to the exterior via the connecting flow path 254, the communication passage 276, the annular groove 292, and the discharge port 272. Therefore, due to the biasing force of the biasing member 290, the valve element 266 moves downward with respect to the base member 12. In accordance therewith, since the table unit 14 moves downward relatively with respect to the base member 12, the table unit 14 can be brought closer to the origin position.

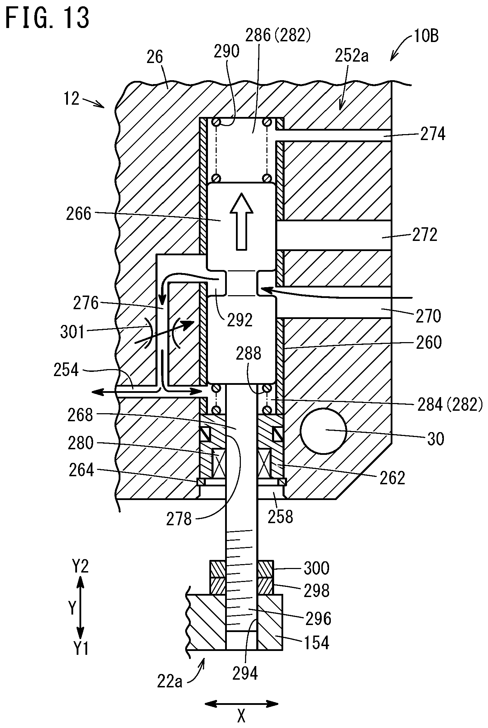

In the case that the table unit 14 is positioned below the origin position, then as shown in FIG. 13, the inlet port 270 is placed in communication with the annular groove 292 and the discharge port 272 is closed by the valve element 266 in the spool valve 252a. Moreover, the air port 274 is in communication with the second chamber 286. Upon doing so, the fluid, which is supplied to the inlet port 270 from a non-illustrated supply source, is guided to the first chamber 284 via the annular groove 292 and the communication passage 276. Further, the fluid, which is introduced from the inlet port 270 of the spool valve 252a into the annular groove 292 and the communication passage 276 of the spool valve 252a, is guided via the connecting flow path 254 to the first chamber 284 of the spool valve 252b (refer to FIG. 11).

In accordance therewith, the pressure in the annular groove 292 and the first chamber 284 increases in the spool valve 252a, and the pressure in the first chamber 284 increases in the spool valve 252b, and therefore, the valve element 266 moves upward with respect to the base member 12. In accordance therewith, since the table unit 14 moves upward relatively with respect to the base member 12, the table unit 14 can be brought closer to the origin position.

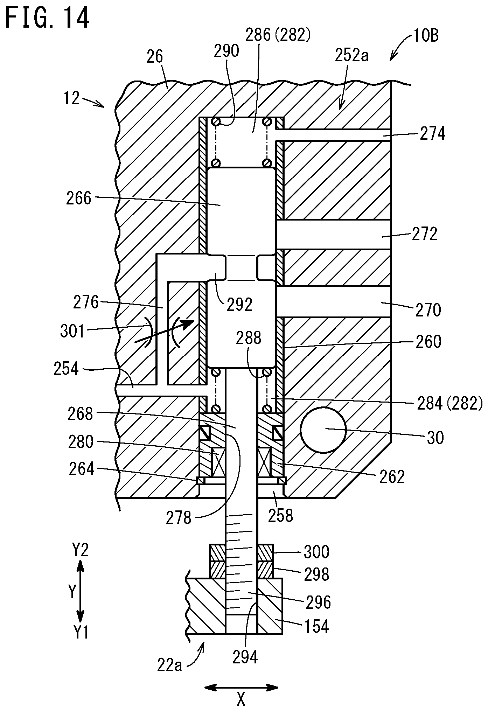

According to the present embodiment, by means of the position adjusting nut 298, the valve element 266 is adjusted so as to become positioned at the position shown in FIG. 14 at the origin position of the table unit 14. In this case, the valve element 266 of the spool valve 252a closes the inlet port 270 and the discharge port 272 at the origin position. In other words, the annular groove 292 of the spool valve 252a does not communicate with either the inlet port 270 or the discharge port 272. In accordance therewith, the first chamber 284 of each of the spool valves 252a and 252b is sealed.

In this state, the weight of the table unit 14 and the like and the force of the fluid (the compressed air) that is sealed in the first chambers 284 of the pair of spool valves 252a and 252b balance each other, and the table unit 14 stops at the origin position. In this instance, the weight of the table unit 14 and the like includes the weight of the table unit 14 and the weight of the chuck member (the hand) that is mounted on the table unit 14.

In such a compliance unit 10B, when flowing through the communication passage 276, the fluid flows through the variable throttling portion 301, and therefore, vibrations of the base member 12 caused when the fluid is supplied to and discharged from the first chamber (the pressurizing chamber) 284 can be suppressed. The flow path cross-sectional area (the amount of throttling) of the variable throttling portion 301 can be adjusted in accordance with the weight of the table unit 14.

Moreover, in the case that the compliance unit 10B is not used, the control unit 308 turns OFF the opening/closing valve 256, and thereby closes the supply and discharge flow path 302.

According to the present embodiment, the valve element 266 of the spool valve 252a and the pressing member 156 are connected by the connecting member 154. In accordance therewith, even in the case that the position of the table unit 14 shifts from the origin position in a state in which the external force does not act on the table unit 14, the position of the table unit 14 can be returned to the origin position by the spool valve 252a.

### (Fourth Embodiment)

Next, a description will be given concerning a compliance unit 10C according to a fourth embodiment. In the compliance unit 10C according to the present embodiment, the same reference numerals are used for the same constituent elements as those of the compliance units 10, 10A, and 10B according to the first through third embodiments described above, and detailed description of such features will be omitted. In the compliance unit 10C, configurations thereof that are similar to those of the compliance units 10, 10A, and 10B achieve similar effects.

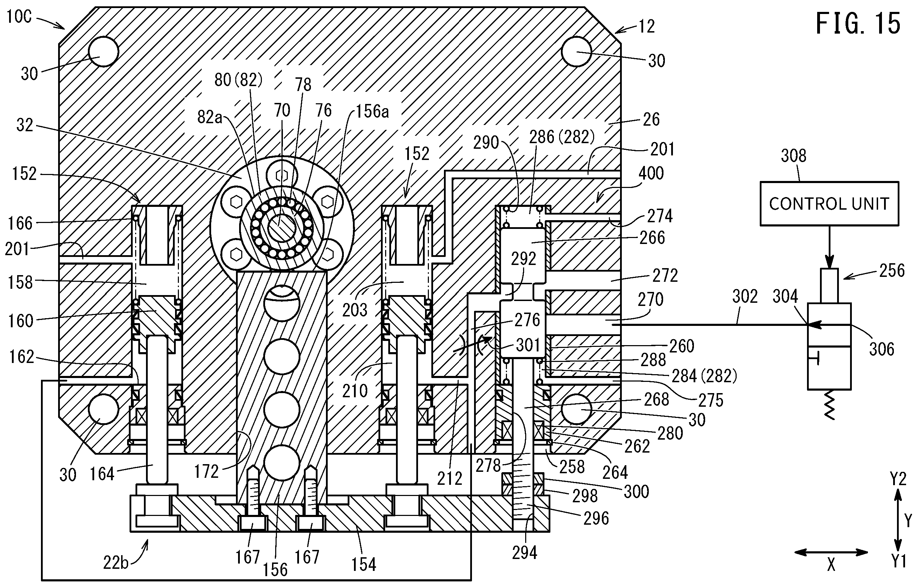

FIG. 15 is a cross-sectional explanatory diagram of the compliance unit 10C according to the fourth embodiment. As shown in FIG. 15, the compliance unit 10C is equipped with a pressing mechanism 22b instead of the pressing mechanism 22 described above.

The pressing mechanism 22b includes the pair of third cylinder portions 152, a spool valve 400, the opening/closing valve 256, the connecting member 154, and the pressing member 156. The above-described exhaust port 201 is disposed in each of the third cylinder portions 152. The spool valve 400 is positioned in the X direction with respect to the third cylinder portions 152.

The spool valve 400 includes the valve hole 258, the sleeve 260, the head cover 262, the retaining ring 264, the valve element 266, the rod portion 268, the inlet port 270, the discharge port 272, the air port 274, an exhaust port 275, and the communication passage 276. The male threaded portion 296 of the rod portion 268 is screwed into the female threaded portion 294 that is formed in the connecting member 154. The position adjusting nut 298 and the fixing nut 300 are screwed onto the male threaded portion 296. The variable throttling portion 301 is disposed in the communication passage 276. The communication passage 276 is connected to the supply and discharge flow path 212. The supply and discharge flow path 212 communicates with the pressurizing chamber 210 of each of the third cylinder portions 152.

The opening/closing valve 256 opens and closes the supply and discharge flow path 302 that communicates with the inlet port 270. The compliance unit 10C includes the control unit 308 that controls operations of the opening/closing valve 256.

In such a compliance unit 10C, in the case that the table unit 14 is positioned above the origin position, the inlet port 270 is closed by the valve element 266. Upon doing so, the fluid inside the pressurizing chamber 210 of each of the third cylinder portions 152 is discharged to the exterior via the supply and discharge flow path 212, the communication passage 276, the annular groove 292, and the discharge port 272.

As a result, in each of the third cylinder portions 152, the pressure in the pressurizing chamber 210 decreases, and therefore, the third piston member 160 moves downward with respect to the base member 12. In accordance therewith, since the table unit 14 moves downward with respect to the base member 12, the position of the table unit 14 is brought closer to the origin position.

On the other hand, in the case that the table unit 14 is positioned below the origin position, the inlet port 270 is placed in communication with the annular groove 292, and the discharge port 272 is closed by the valve element 266 in the spool valve 400. Upon doing so, the fluid, which is supplied to the inlet port 270 from a non-illustrated supply source, is guided to the pressurizing chamber 210 of each of the third cylinder portions 152 via the annular groove 292, the communication passage 276, and the supply and discharge flow path 212. As a result, in each of the third cylinder portions 152, the pressure in the pressurizing chamber 210 increases, and therefore, the third piston member 160 moves upward with respect to the base member 12. In accordance therewith, since the table unit 14 moves upward with respect to the base member 12, the position of the table unit 14 is brought closer to the origin position.

According to the present embodiment, the valve element 266 of the spool valve 400 closes the inlet port 270 and the discharge port 272 at the origin position of the table unit 14. In other words, the annular groove 292 of the spool valve 400 does not communicate with either the inlet port 270 or the discharge port 272. In accordance therewith, the pressurizing chamber 210 of each of the third cylinder portions 152 is sealed.

In this state, the weight of the table unit 14 and the like and the force of the fluid (the compressed air) that is sealed in the pressurizing chambers 210 of the pair of third cylinder portions 152 balance each other, and the table unit 14 stops at the origin position.

In accordance with such a configuration, similar effects to those of the compliance units 10, 10A, and 10B described above can be achieved.

In relation to the above-described embodiments, the following supplementary notes are further disclosed.

### (Supplementary Note 1)

The compliance unit (10, 10A, 10B, 10C) of the present disclosure comprises the base member (12), the table unit (14) disposed to be capable of moving with respect to the base member along the XY plane, wherein the upper-lower direction is the Y direction, and the direction perpendicular to the Y direction is the X direction, the compliance mechanism (16) interposed between the base member and the table unit so as to be capable of moving in the X direction and the Y direction with respect to the base member and the table unit, and the pressing member (156) that is disposed on the base member and presses the table unit upward.

In accordance with such a configuration, since the compliance unit is equipped with the pressing member that is disposed on the base member and presses the table unit upward, it is possible to suppress a situation in which the table unit moves downward with respect to the base member due to its own weight. Thus, it is possible to provide a more satisfactory compliance unit.

### (Supplementary Note 2)

In the compliance unit according to Supplementary Note 1, the table unit may include the shaft portion (84) positioned in the central part of the table unit in the X direction, the shaft portion may extend toward the base member via the holes (17) of the compliance mechanism, and the pressing member may press the shaft portion upward.

In accordance with such a configuration, it is possible to suppress a situation in which the table unit pressed by the pressing member is tilted in the circumferential direction of the shaft due to its own weight.

### (Supplementary Note 3)

In the compliance unit according to Supplementary Note 2, the table unit may include the roller portion (82) in which the shaft portion is disposed, the roller portion being disposed to be capable of rotating with respect to the shaft portion, and the pressing member may press the roller portion upward in a state of being in contact with the outer circumferential surface (82a) of the roller portion.

In accordance with such a configuration, since the pressing member is placed in contact with the outer circumferential surface of the roller portion, frictional resistance between the pressing member and the table unit can be made comparatively small. In accordance therewith, for example, the table unit can be made to move smoothly along the Y direction with respect to the base member.

### (Supplementary Note 4)

The compliance unit according to Supplementary Note 3 may further comprise the cylinder portion (152) configured to press the pressing member upward.

In accordance with such a configuration, by the cylinder portion pressing the pressing member upward, the table unit can be pressed upward.

### (Supplementary Note 5)

The compliance unit according to Supplementary Note 4 may further comprise the biasing member (166) configured to bias the pressing member downward.

In accordance with such a configuration, in a state in which the weight of the table unit and the pressing force from the pressing member are balanced, the piston of the cylinder portion can be positioned in an intermediate position of the stroke.

### (Supplementary Note 6)

In the compliance unit according to any one of Supplementary Notes 1 to 5, the table unit may include the table support member (48), the table main body (50) that is disposed on the table support member to be capable of being tilted about an axial line lying along the X direction, and the tilting suppression member (24) that is disposed on the table support member and suppresses tilting of the table main body with respect to the table unit due to gravity.

In accordance with such a configuration, in a state in which the compliance unit is disposed in a manner so that the Y direction is the upper-lower direction, it is possible to suppress a situation in which the table main body becomes tilted with respect to the table unit due to its own weight.

### (Supplementary Note 7)

In the compliance unit according to Supplementary Note 6, the tilting suppression member may press the lower end part of the table main body in an opposite direction to the table support member.

In accordance with such a configuration, tilting of the table main body due to its own weight can be easily suppressed.

### (Supplementary Note 8)

The compliance unit according to Supplementary Note 7 may further comprise the contact portion (180) that contacts the table main body, and the tilting suppression cylinder portion (178) configured to press the contact portion toward the table main body.

In accordance with such a configuration, by the tilting suppression cylinder portion pressing the contact portion, the lower end part of the table main body can be pressed in an opposite direction to the table support member.

### (Supplementary Note 9)

The compliance unit according to Supplementary Note 8 may further comprise the tilting suppression biasing member (188) that biases the contact portion in a direction away from the table main body.

In accordance with such a configuration, in a state in which the weight of the table main body and the pressing force from the contact portion are balanced, the piston of the tilting suppression cylinder portion can be positioned in an intermediate position of the stroke.

### (Supplementary Note 10)

The compliance unit according to any one of Supplementary Notes 1 to 9 may further comprise the cylinder portion configured to cause the pressing member to move in the Y direction with respect to the base member, the valve (202) that controls the flow rate of the fluid supplied to and discharged from the pressurizing chamber (210) of the cylinder portion, and the valve control unit (228) that controls the operations of the valve, wherein the valve control unit may carry out the feedback control of the operations of the valve in a manner so that the table unit is positioned at the origin position in a state in which the external force does not act on the table unit.

In accordance with such a configuration, even in the case that the position of the table unit shifts from the origin position in a state in which the external force does not act on the table unit, the position of the table unit can be returned to the origin position by the valve control unit.

### (Supplementary Note 11)

The compliance unit according to Supplementary Note 10 may further comprise the position acquisition unit (224) that acquires, based on the signal detected by the position sensor (206), the position of the table unit with respect to the base member in the upper-lower direction, wherein the valve control unit may carry out the feedback control of the operations of the valve based on the position acquired by the position acquisition unit.

In accordance with such a configuration, the position of the table unit can be returned to the origin position with even greater accuracy.

### (Supplementary Note 12)

The compliance unit according to Supplementary Note 10 may further comprise the pressure acquisition unit (226) that acquires, based on the signal detected by the pressure sensor (208), the pressure in the pressure chamber, wherein the valve control unit may carry out the feedback control of the operations of the valve based on the pressure acquired by the pressure acquisition unit.

In accordance with such a configuration, the position of the table unit can be returned to the origin position with even greater accuracy.

### (Supplementary Note 13)

The compliance unit according to any one of Supplementary Notes 1 to 9 may further comprise the spool valve (252a, 252b) including the valve chamber (282) provided in the base member, and the valve element (266) that moves in the Y direction within the valve chamber, and the connecting member (154) that connects the valve element and the pressing member.

In accordance with such a configuration, the valve element of the spool valve and the pressing member are connected by the connecting member. In accordance therewith, even in the case that the position of the table unit shifts from the origin position in a state in which the external force does not act on the table unit, the position of the table unit can be returned to the origin position by adjusting the position of the valve element of the spool valve.

### (Supplementary Note 14)

In the compliance unit according to Supplementary Note 13, the valve chamber may include the first chamber (284) positioned below the valve element, and the second chamber (286) positioned above the valve element, wherein the biasing member (290) that biases the valve element downward may be disposed in the second chamber, wherein in the case that the table unit is positioned above the origin position in a state in which an external force does not act on the table unit, the fluid inside the first chamber may be discharged to the exterior of the first chamber, whereby the valve element may move downward with respect to the base member by the biasing force of the biasing member, and in the case that the table unit is positioned below the origin position in a state in which an external force does not act on the table unit, the fluid may be supplied to the interior of the first chamber, whereby the valve element may move upward with respect to the base member while pressing against the biasing member.

In accordance with such a configuration, by means of a simple configuration, the table unit can be returned to the origin position.

### (Supplementary Note 15)

In the compliance unit according to Supplementary Note 14, the annular groove (292) may be formed in the valve element, the spool valve may include the inlet port (270) configured to cause the fluid to be introduced into the valve chamber, the discharge port (272) that is capable of communicating with the annular groove, and the communication passage (276) that places the first chamber and the annular groove in communication, wherein in the case that the table unit is positioned above the origin position in a state in which an external force does not act on the table unit, the inlet port may be closed by the valve element and the fluid inside the first chamber may be discharged from the discharge port via the communication passage and the annular groove, whereby the valve element may move downward with respect to the base member by the biasing force of the biasing member, and in the case that the table unit is positioned below the origin position in a state in which an external force does not act on the table unit, the discharge port may be closed by the valve element and the fluid may be introduced to the interior of the first chamber from the inlet port via the annular groove and the communication passage, whereby the valve element may move upward with respect to the base member while pressing against the biasing member.

In accordance with such a configuration, by means of a simple configuration, the table unit can be returned to the origin position.

Although concerning the present disclosure, a detailed description thereof has been presented above, the present disclosure is not necessarily limited to the individual embodiments described above. These embodiments can be subjected to various additions, substitutions, modifications, partial deletions and the like, within a range that does not depart from the essence and gist of the present disclosure, or within a range that does not depart from the essence and gist of the present disclosure as derived from the contents described in the claims and their equivalents. Further, these embodiments can also be implemented in combination. For example, in the above-described embodiments, the order of the operations and the order of the processes are shown merely as examples, and the present disclosure is not necessarily limited to these examples. The same applies also in the case that numerical values or mathematical expressions are used in the description of the aforementioned embodiments.

## Claims

1. A compliance unit (10, 10A, 10B, 10C), comprising:
a base member (12);
a table unit (14) disposed so as to be movable with respect to the base member along an XY plane, wherein an upper-lower direction is a Y direction, and a direction perpendicular to the Y direction is an X direction;
a compliance mechanism (16) interposed between the base member and the table unit so as to be movable in the X direction and the Y direction with respect to the base member and the table unit; and
a pressing member (156) disposed on the base member and configured to press the table unit upward.

2. The compliance unit according to claim 1, wherein
the table unit includes a shaft portion (84) positioned in a central part of the table unit in the X direction,
the shaft portion extends toward the base member via a hole (17) of the compliance mechanism, and
the pressing member presses the shaft portion upward.

3. The compliance unit according to claim 2, wherein
the table unit includes a roller portion (82) in which the shaft portion is disposed, the roller portion being disposed so as to be rotatable with respect to the shaft portion, and
the pressing member presses the roller portion upward in a state of being in contact with an outer circumferential surface (82a) of the roller portion.

4. The compliance unit according to Claim 3, further comprising a cylinder portion (152) configured to press the pressing member upward.

5. The compliance unit according to claim 4, further comprising a biasing member (166) configured to bias the pressing member downward.

6. The compliance unit according to any one of claims 1 to 5, wherein
the table unit includes:
a table support member (48);
a table main body (50) disposed on the table support member so as to be tiltable about an axial line lying along the X direction; and
a tilting suppression member (24) disposed on the table support member and configured to suppress tilting of the table main body with respect to the table unit due to gravity.

7. The compliance unit according to claim 6, wherein the tilting suppression member presses a lower end part of the table main body in an opposite direction to the table support member.

8. The compliance unit according to claim 7, further comprising:
a contact portion (180) configured to contact the table main body; and
a tilting suppression cylinder portion (178) configured to press the contact portion toward the table main body.

9. The compliance unit according to claim 8, further comprising a tilting suppression biasing member (188) configured to bias the contact portion in a direction away from the table main body.

10. The compliance unit according to claim 1, further comprising:
a cylinder portion configured to cause the pressing member to move in the Y direction with respect to the base member;
a valve (202) configured to control a flow rate of a fluid supplied to and discharged from a pressurizing chamber (210) of the cylinder portion; and
a valve control unit (228) configured to control an operation of the valve,
wherein the valve control unit carries out a feedback control of the operation of the valve in a manner so that the table unit is positioned at an origin position in a state in which an external force does not act on the table unit.

11. The compliance unit according to claim 10, further comprising a position acquisition unit (224) configured to acquire, based on a signal detected by a position sensor (206), a position of the table unit with respect to the base member in the upper-lower direction,
wherein the valve control unit carries out the feedback control of the operation of the valve based on the position acquired by the position acquisition unit.

12. The compliance unit according to claim 10, further comprising a pressure acquisition unit (226) configured to acquire, based on a signal detected by a pressure sensor (208), a pressure in the pressure chamber,
wherein the valve control unit carries out the feedback control of the operation of the valve based on the pressure acquired by the pressure acquisition unit.

13. The compliance unit according to claim 1, further comprising:
a spool valve (252a, 252b) including a valve chamber (282) provided in the base member, and a valve element (266) configured to move in the Y direction within the valve chamber; and
a connecting member (154) configured to connect the valve element and the pressing member.

14. The compliance unit according to claim 13, wherein
the valve chamber includes:
a first chamber (284) positioned below the valve element; and
a second chamber (286) positioned above the valve element,
a biasing member (290) configured to bias the valve element downward is disposed in the second chamber,
in a case that the table unit is positioned above an origin position in a state in which an external force does not act on the table unit, a fluid inside the first chamber is discharged to an exterior of the first chamber, whereby the valve element moves downward with respect to the base member by a biasing force of the biasing member, and
in a case that the table unit is positioned below the origin position in the state in which the external force does not act on the table unit, the fluid is supplied to an interior of the first chamber, whereby the valve element moves upward with respect to the base member while pressing against the biasing member.

15. The compliance unit according to claim 14, wherein
an annular groove (292) is formed in the valve element,
the spool valve includes:
an inlet port (270) configured to cause the fluid to be introduced into the valve chamber;
a discharge port (272) that is allowed to communicate with the annular groove; and
a communication passage (276) configured to place the first chamber and the annular groove in communication,
in the case that the table unit is positioned above the origin position in the state in which the external force does not act on the table unit, the inlet port is closed by the valve element and the fluid inside the first chamber is discharged from the discharge port via the communication passage and the annular groove, whereby the valve element moves downward with respect to the base member by the biasing force of the biasing member, and
in the case that the table unit is positioned below the origin position in the state in which the external force does not act on the table unit, the discharge port is closed by the valve element and the fluid is introduced to the interior of the first chamber from the inlet port via the annular groove and the communication passage, whereby the valve element moves upward with respect to the base member while pressing against the biasing member.
